# EUROPEAN PATENT APPLICATION

(11) **EP 2 033 878 A1**
(43) Date of publication of application: **11.03.2009**
(21) Application number: 07742913.2
(22) Date of filing: 08.05.2007
(51) Int. Cl.: B62D 25/08, B60K 11/04

(54) **RADIATOR CORE SUPPORT STRUCTURE**

(30) Priority: 13.06.2006 JP 2006163078
(71) Applicant: Calsonic Kansei Corporation, Tokyo 164-8602 (JP)
(72) Inventor: JYOUTAKI, Noboru, Aichi 164-8602 (JP); INOUE, Hiroyuki, Tokyo 164-8602 (JP)
(74) Representative: Oxley, Robin John George
(86) International application number: PCT/JP2007/059478
(87) International publication number: WO 2007/145039

(57) **Abstract**

A radiator core support structure includes a radiator core support (1), a first heat exchanger (4) and a second heat exchanger (2, 3). The radiator core support (1) has a lower radiator core support member (1b). The first heat exchanger (4) is arranged to face a front surface of the lower radiator core support member (1b) to cover a front surface thereof. The second heat exchanger (2, 3) is aligned with the first heat exchanger (4) at a rear side thereof. The lower radiator core support member (1b) is formed with an airflow space (6) that is formed inside of the lower radiator core support member (1b) to extend in a lateral direction of a vehicle. The airflow space (6) is fluidically connected with an intake opening portion (6a) that is formed on the front surface of the lower radiator core support member (1b) at a position where the first heat exchanger (4) faces the lower radiator core support member (1b) to cover, and also with an exhaust opening portion (6b) that is formed at on a partial portion of the lower radiator core support member (1b).

## Description

### [FIELD OF THE INVENTION]

The present invention relates to a radiator core support structure that supports and fixes a heat exchanger thereon.

### [BACKGROUND OF THE INVENTION]

A conventional radiator core support structure is constructed as a front end module of a motor vehicle that supports and fixes a heat exchanger mainly consisting of a radiator and a condenser, and it is conveyed to an assembly line of a vehicle body so as to be mounted on the motor vehicle. Such the conventional radiator core support structure is disclosed in Japanese Patent Application Laid-Open Publication No. 2002 - 166848.
Incidentally, in recent days, the radiator core support structure also supports and fixes various additional heat exchangers, such as an oil cooler, an inter-cooler and a sub-radiator, in addition to the radiator and the condenser. In these cases, a lower radiator core support member supports and fixes the additional heat exchanger/exchangers in a state where it is or they are located in a front side of the lower radiator core support member to cover a front surface thereof because of an installation layout thereof.

### [DISCLOSURE OF THE INVENTION]

### [PROBLEM(S) TO BE SOLVED BY THE INVENTION]

The conventional radiator core support structure, however, has a problem in that, in the case where the front surface of the lower radiator core support member is covered by the additional heat exchanger/exchangers, the air passing through the additional heat exchanger/exchangers hits against the front surface of the lower radiator core support member and it stagnates there, thereby increasing a ventilation resistance to decrease a cooling ability.

The present invention is made to resolve the above-described problem, and its object is to provide a radiator core support structure that can decrease ventilation resistance due to installation of an additional heat exchanger to cover a front surface of a lower radiator core support member, thereby increasing a cooling ability.

### [MEANS FOR SOLVING THE PROBLEMS]

According to an aspect of the present there is provided a radiator core support structure including a radiator core support, a first heat exchanger and a second heat exchanger. The radiator core support has a lower radiator core support member. The first heat exchanger is arranged to face a front surface of the lower radiator core support member to cover the front surface thereof. The second heat exchanger is aligned with the first heat exchanger at a rear side thereof. The lower radiator core support member is formed with an airflow space that is formed inside of the lower radiator core support member to extend in a lateral direction of a vehicle. The airflow space is fluidically connected with an intake opening portion that is formed on the front surface of the lower radiator core support member at a position where the first heat exchanger faces the lower radiator core support member to cover, and also with an exhaust opening portion that is formed at on a partial portion of the lower radiator core support member.

Preferably, the exhaust opening portion is formed on an end portion, in the lateral direction, of the lower radiator core support member.

### [EFFECTS OF THE INVENTION]

In the radiator core support structure of the present invention, the first heat exchanger is arranged to be aligned with the second heat exchanger, and the lower radiator core support member is formed with the airflow space that is formed inside of the lower radiator core support member to extend in the lateral direction of the motor vehicle. The airflow space is fluidically connected with the intake opening portions that are formed on the front surface of the lower radiator core support member at the positions where the first heat exchanger faces the lower radiator core support member to cover, and also with the exhaust opening portions that are formed at on the both end portions of the lower radiator core support member. Therefore, ventilation resistance of the first heat exchanger, which is arranged to cover the front surface of the lower radiator core support member can be decreased, and accordingly cooling ability thereof can be improved.

The exhaust opening portion is formed on an end portion, in the lateral direction, of the lower radiator core support member. Therefore, necessary vertical directional rigidness of the lower radiator core support member 1b can be ensured, and the air discharged from the exhaust opening portions can be prevented from being blown back toward a front surface of the first heat exchanger.

### [BRIEF DESCRIPTION OF THE DRAWINGS]

The objects, features and advantages of the present invention will become apparent as the description proceeds when taken in conjunction with the accompanying drawings, in which:
FIG. 1 is a perspective view showing a radiator core support structure, of an embodiment according to the present invention, in which with heat exchangers are attached on a radiator core support;
FIG. 2 is a perspective view showing the radiator core support, in which the heat radiators are detached therefrom, according to the embodiment;
FIG. 3 is a perspective view showing a radiator as one of the heat exchangers that is employed for the radiator core support member of the embodiment;
FIG. 4 is a front view showing the radiator shown in FIG. 3;
FIG. 5 is a perspective view showing a condenser as the other of the heat exchangers that is employed for the radiator core support structure of the embodiment;
FIG. 6 is a front view showing the condenser shown in FIG. 5;
FIG. 7 is a perspective view showing an inter-cooler as an additional heat exchanger that is employed for the radiator core support structure of the embodiment;
FIG. 8 is a front view showing the inter-cooler shown in FIG. 7;
FIG. 9 is a perspective view showing the radiator core support structure in which the radiator and the condenser are fixed on the radiator core support;
FIG. 10 is a perspective fragmentary view illustrating fixation of the radiator core support and the inter-cooler in the radiator core support structure of the embodiment; and
FIG. 11 is a fragmentary side view illustrating a layout of the radiator core support, the radiator, the condenser and the inter-cooler in the radiator core support structure of the embodiment.

### [DESCRIPTION OF REFFERENCE NUMBER]

- 1: radiator core support
- 1a: upper radiator core support member
- 1b: lower radiator core support member
- 1c: side radiator core support member
- 1d: hood lock stay
- 1e: radiator core support upper central portion
- 1f: radiator core support upper side portion
- 1g: side-member attachment plate
- 1h: head lamp stay
- 1i: bumper armature
- 1j: first fixing hole
- 1k: first fixing portion
- 1m: second fixing hole
- I n: second fixing portion
- 2: radiator
- 2a, 2b, 3a, 3b, 4a,: tank
- 2c, 3c, 4c: core part
- 2d, 2e: tube plate
- 2f, 3d, 4f: inlet port
- 2g, 3e, 4g: outlet port
- 2h, 2i, 3g, 3h: mounting pin
- 2j: filler neck
- 2k, 3i, 4h: tube
- 2m, 3j, 4i: fin
- 2n, 2o, 4j, 4k: reinforcement member
- 3: condenser
- 3f: receiver tank
- 4: inter-cooler
- 4d: fixing hole
- 4e: fixing portion
- 5: bracket portion
- 5a: fixing hole
- 6: airflow space
- 6a: intake opening portion
- 6b: exhaust opening portion
- 7: fastening member
- 9a, 9b: air guide

### [BEST MODE FOR CARRYING OUT THE INVENTION]

Throughout the following detailed description, similar reference characters and numbers refer to similar elements in all figures of the drawings, and their descriptions are omitted for eliminating duplication.
Hereinafter, an embodiment of the present invention will be described with reference to the accompanying drawings.

### [EMBODIMENT]

A radiator core support structure of the embodiment will be described. In the radiator core support structure of the embodiment, an inter-cooler is employed as an additional heat exchanger that is mounted on a lower radiator core support member in a state where it covers a front surface of the lower radiator core support member.
In the following description, a longitudinal direction of a motor vehicle and a lateral direction thereof are explained as a front and back direction and a left and right direction, respectively.

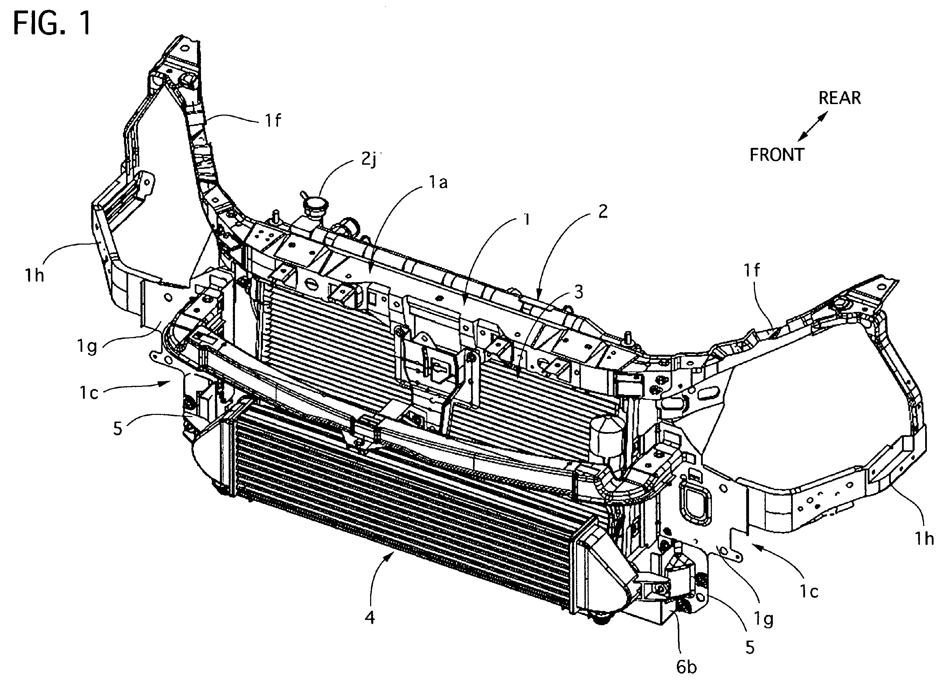

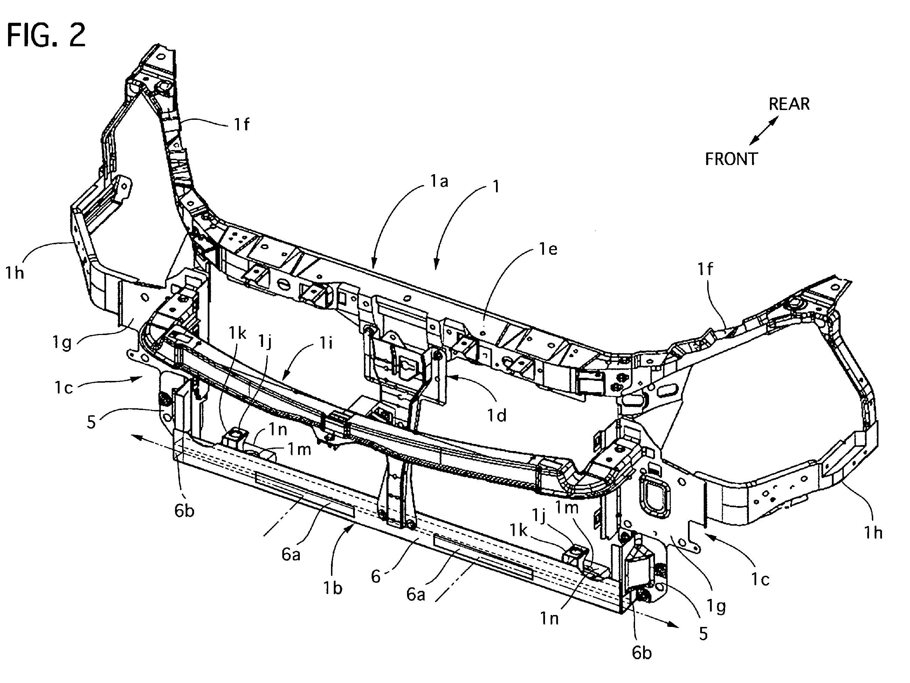

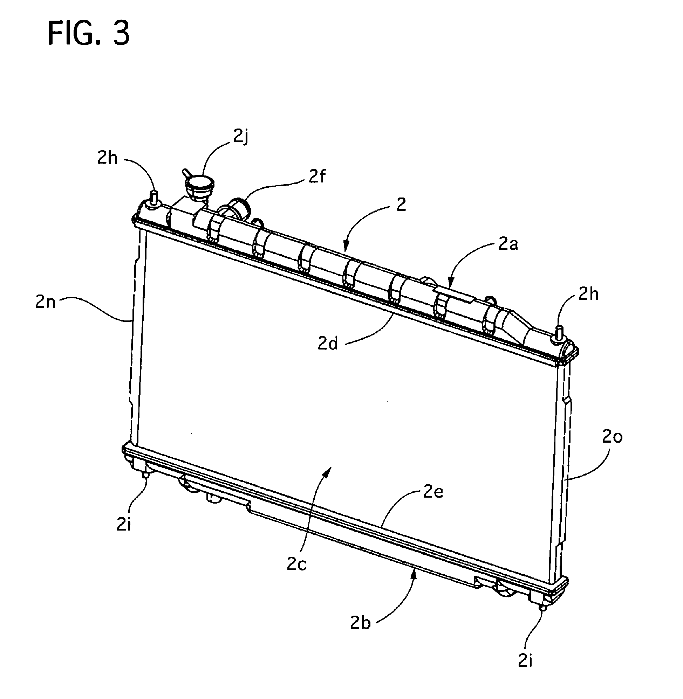

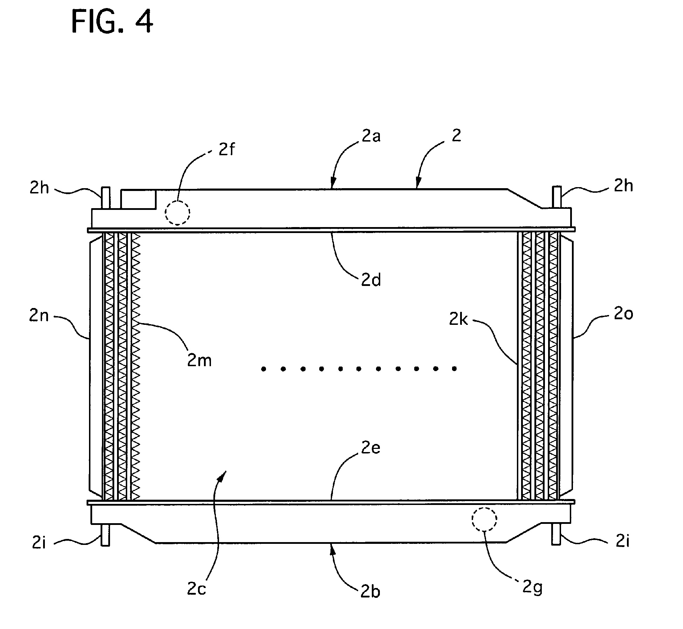

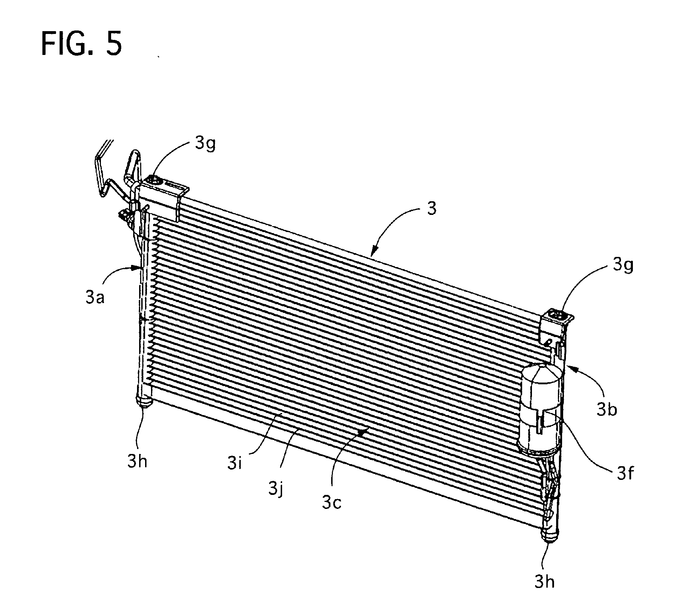

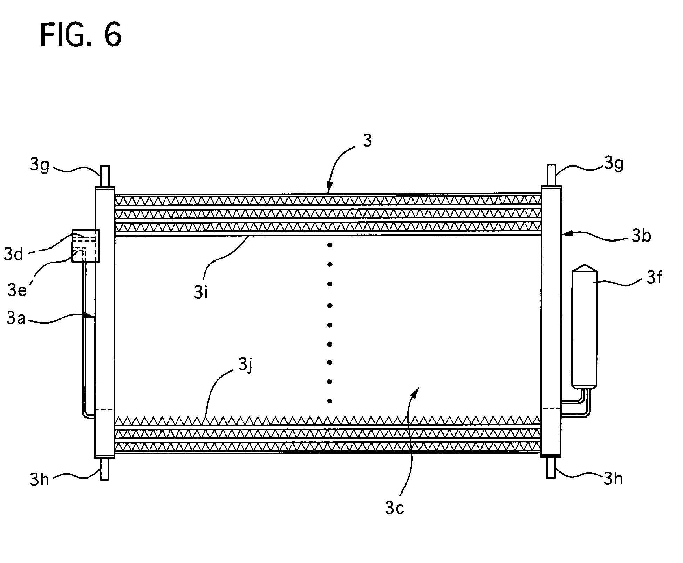

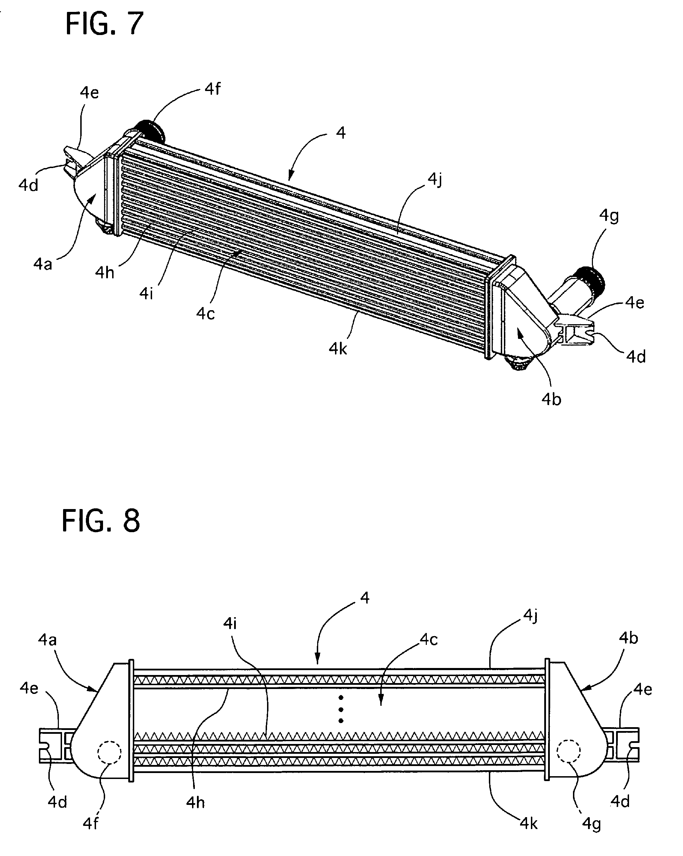

FIG. 1 is a perspective view of the radiator core support structure of the embodiment, FIG. 2 is a perspective view of a radiator core support used in the radiator core support structure, FIG. 3 is a perspective view of the radiator core support, FIG. 4 is a front view of the radiator core support, FIG. 5 is a perspective view of a condenser used in the embodiment, FIG. 6 is a front view of the condenser, FIG. 7 is a perspective view of an inter-cooler used in the embodiment, and FIG. 8 is a front view of the inter-cooler.

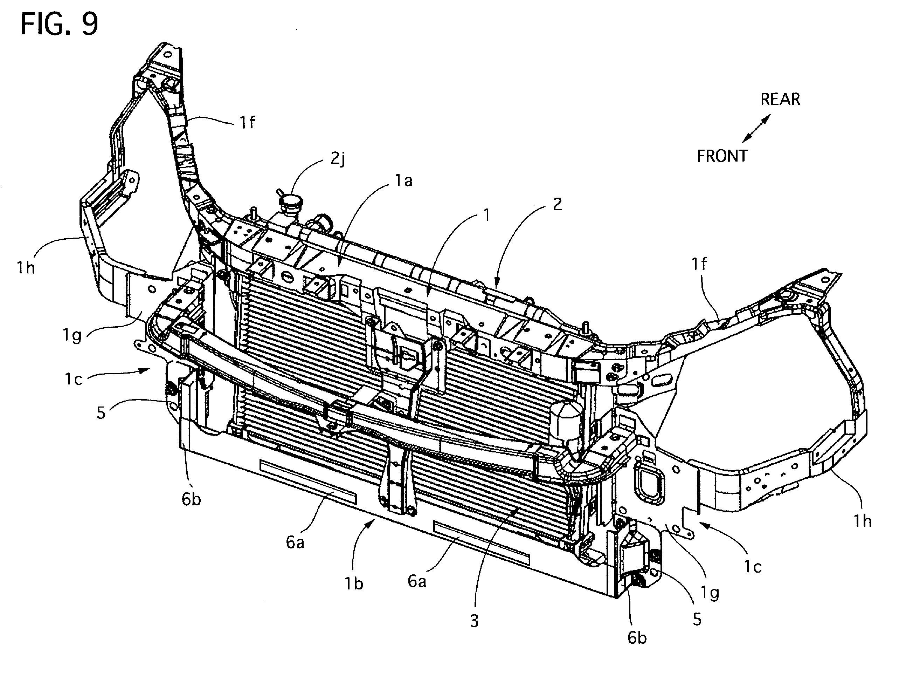

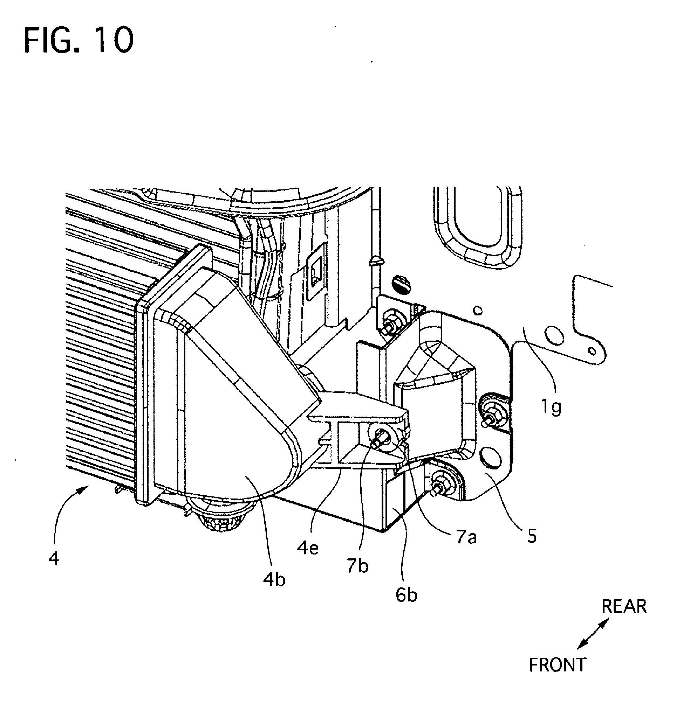

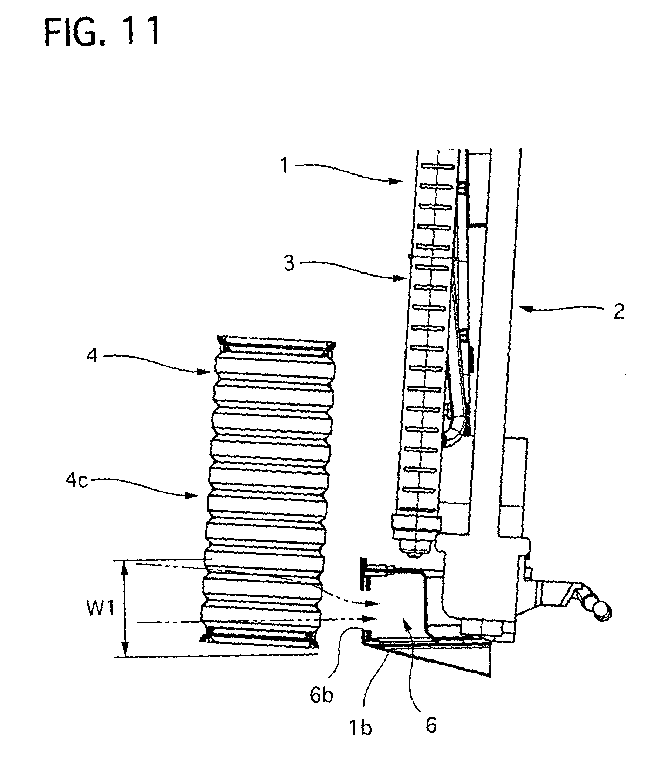

FIG. 9 is a perspective view illustrating fixation of the radiator core support, the radiator and the condenser that are used in the embodiment, FIG. 10 is a perspective view illustrating fixation of the radiator core support and the inter-cooler, and FIG. 11 is a side view illustrating fixation of the radiator core support, the radiator, the condenser and the inter-cooler.

As shown in FIG. 1, the radiator core support structure of the embodiment includes a radiator core support 1, a radiator 2, a condenser 3 and an inter-cooler 4, where the radiator 2, the condenser 3 and the inter-cooler 4 are arranged in these order from a rear side toward a front side. Incidentally, the inter-cooler 4 corresponds to a first heat exchanger of the present invention, and the radiator 2 and the condenser 3 correspond to a second heater exchanger of the present invention.

As shown in FIG. 2, the radiator core support 1 has an upper radiator core support member 1a that extends in a left and right direction, a lower radiator core support member 1b that is arranged parallel to and below the upper radiator core support member 1a, left and right side radiator core support members 1c that connect both end portions of the upper radiator core support member 1a and the lower radiator core support member 1b, and a hood lock stay 1d that connects a central portion of the upper radiator core support member 1a and a central portion of the lower radiator core support member 1b. The radiator core support 1 is entirely made of metal material.

The upper radiator core support 1a is formed to have a radiator core support upper center portion 1e that is shaped like U-letter to open backward, and two radiator core support upper side portions 1f that extend obliquely backward on from the both end portions of the radiator core support upper portion 1e, being shaped like U-letter to open downward.

The left and right side radiator core support members 1c respectively include left and right side-member attachment plates 1g, which are fastened on not-shown left and right side members of a vehicle body, respectively. They also have left and right head lump stays 1h that are connectef between the left and right side-member attachment plates 1g and the left and right radiator core support upper side portions 1f, respectively.
In addition, a bumper armature 1j is provided to project forward from the radiator core support 1 so that it is connected with the inner sides of the side-member attachment plates 1g and an intermediate portion of the hood lock stay 1d. Further, lower portions of the left and right side-member attachment plates 1g are connected with bracket portions 5, which are formed on left and right end portions of the lower radiator core support member 1b.

As shown in FIG. 2, the lower radiator core support member 1b is formed to have a rectangular cross section having a hollow therein, and it extends in the left and right direction, so that the hollow functions as an airflow space 6 that extends in the left and right direction. The lower radiator core support member 1b is also formed with left and right exhaust opening portions 6b at both end portions thereof.

Specifically, the airflow space 6 is formed to extend in the left and right direction inside the lower radiator core support member 1b, and the airflow space 6 is connected with left and right intake opening portions 6a which are formed in the front surface of the lower radiator core support member 1b, and also with the left and right exhaust opening portions 6b which are formed in the both end portion thereof in the left and right direction.

In addition, the lower radiator core support member 1b is provided at its both end portions with first fixing portions 1k and second fixing portions In, where the first and second fixing portions 1k and In project backward and they are formed with a first fixing hole 1j and a second fixing hole 1m, respectively.

As shown in FIG. 3 and FIG. 4, the radiator 2 has a pair of tanks 2a and 2b that are made of plastic material and a core part 2c that is made of metal material. The tanks 2a and 2b are arranged apart from each other to have a predetermined distance therebetween in a vertical direction, and the core part 2c is arranged between the tanks 2a and 2b.
Each tank 2a, 2b is formed like a vessel, an opening portion of which is caulked with a corresponding tube plate 2d, 2e through a not-shown seal member. An inlet port 2f is formed at a rear surface of the tank 2a to be shaped like a circular cylinder that projects backward to fluidically communicate with an inner space of the tank 2a, while an outlet port 2g is formed at a rear surface of the tank 2b to be shaped like a circular cylinder that projects backward to fluidically communicate with an inner space of the tank 2b.
In addition, left and right mounting pins 2h are formed on left and right top end portions of the tank 2a to project upward, and left and right mounting pins 2i are formed on left and right bottom end portions of the tank 2b to project downward.
Incidentally, a filler neck 2j is provided near the inlet port 2f as shown in FIG. 1, while its position is not limited to a position set in this embodiment.

The core part 2c has a plurality of flat tubes 2k, in which both end portions thereof are inserted into and fixed to the tube plates 2d and 2e, and a plurality of corrugated fins 2m that are each arranged between the adjacent tubes 2k. A pair of reinforcement members 2n and 2o strongly connects the both end portions of the core part 2c.

As shown in FIG. 5 and FIG. 6, the condenser 3 has a pair of tanks 3a and 3b, which are arranged apart from each other to have a predetermined distance therebetween in the left and right direction, and a core part 3c that are arranged between the tanks 3a and 3b.
An inner space of each tank 3a, 3b is divided by a partition plate, which is indicated by a broken line AA, BB as shown in FIG. 6, into a concentrating part at an upper side and an over-cooling part at a lower side. The tank 3a is provided with an inlet port 3d that fluidically communicates with the concentrating part and an outlet port 3e that fluidically communicates with the over-cooling part of the tank 3a, while the tank 3b is provided with a receiver tank 3f that fluidically communicates with both of the concentrating part and the over-cooling part of the tank 3b.
In addition, two mounting pins 3g are provided on a top portion of the tank 3a to project upward, and two mounting pins 3h are provided on a bottom portion to project downward.

The core part 3c has a plurality of flat tubes 3i, in which both end portions thereof are inserted and fixed to the tank 3a, 3b, and a plurality of corrugated fins 3j that are each arranged between the adjacent tubes 3j.
Incidentally, all of parts of the condenser 3 of the embodiment are made of aluminum, but its material is not limited to the aluminum. In addition, positions of the inlet port 3d, an outlet connector 3e and the receiver tank 3f may be set appropriately.

As shown in FIG. 7 and FIG. 8, the inter-cooler 4 has a pair of tanks 4a and 4b, which are arranged apart from each other to have a predetermined distance therebetween in the left and right direction, and a core part 4c that is arranged between the tanks 4a and 4b.
Each tank 4a, 4b has a fixing portion 4e formed with a fixing hole 4d.
In addition, the tank 4a is formed on its rear surface with an inlet port 4f that projects backward to fluidically communicate with an inner space thereof, while the tank 4b is formed in its rear surface with an outlet port 4g that projects backward to fluidically communicate with the inner space.

The core part 4c has a plurality of flat tubes 4h, in which both end portions thereof are respectively inserted into and fixed to bottom portions of the tanks 4a and 4b, and a plurality of corrugated fins 4i that are each arranged between the adjacent tubes 4h. A pair of reinforcement members 4i and 4k strongly connects the tanks 4a and 4b with each other at both of their end portions in the vertical direction.
In addition, all parts of the inter-cooler 4 are made of aluminum.

Next, an assembly process of the radiator core support structure of the embodiment will be described.
In order to assemble the radiator core support 1, the radiator 2, the condenser 3 and the inter-cooler4, first the condenser 3 is fixed on the radiator core support 1 as follows. The mounting pins 3h of the condenser 3 are inserted, from a rear side of the radiator core support 1, and fixed into the corresponding fixing holes 1j of the fixing portions 1k of the lower radiator core support member 1b through not-shown insulating members. Then in this state, the mounting pins 3g of the condenser 3 are fixed into the upper radiator core support member 1a through not-shown insulating members and brackets.

In the following step, the radiator 2 is fixed on the radiator core support 1 as follows. As shown in FIG. 9, the mounting pins 2i of the radiator 2 are inserted and fixed, from the rear side of the radiator core support 1, into the corresponding fixing holes 1m of the fixing portions 1n of the lower radiator core support member 1b through not-shown insulating members. Then in this state, the mounting pins 2h of the radiator 2 are fixed into the upper radiator core support member 1a through not-shown insulating members and brackets.

Then, as shown in FIG. 10, from a front side of the radiator core support 1, the fixing holes 4d of the fixing portions 4e, which are formed at the both end portions of the inter-cooler 4, are brought to be aligned with the not-shown corresponding holes of the bracket portions 5. In this state, fastening members 7b are inserted and fixed into the holes through insulating members 7a, so that the inter-cooler is fixed on the radiator core support 1 as shown in FIG. 1.

The thus-constructed radiator core support 1 is attached with not-shown head lamps and peripheral parts to constitute a front end module of the vehicle body, and it is conveyed to an assembly line of a vehicle body to be mounted on the motor vehicle.

Next, the operation of the radiator core support structure of the embodiment will be described.
In the inter-cooler 4 functioning as a heat exchanger that is arranged in front of the radiator core support 1, the intake air, which is compressed by a not-shown supercharger to have a temperature of approximately 160°C, flows in the tank 4a through the inlet port 4f, and then the air is cooled down to approximately 40°C due to heat exchange by the airflow that is generated when the motor vehicle runs or by a not-shown motor fan, while the air flows through the tubes 4h to enter the tank 4b. The cooled air is discharged from the tank 4b through the outlet port 4g to flow in a not-shown engine.
In this operation, as shown in FIG. 2 and FIG. 11, the air passes through portions where the core part 4c of the inter-cooler 4 and the lower radiator core support member 1b are overlapped with each other when they are seen along the front and back direction, to flow in the airflow space 6 through the intake opening portions 6a, as indicated by alternate long and two short dashes lined arrows, without hitting against the front surface of the lower radiator core support member 1b and stagnating there. The air is divided to flow in the both of the left and right directions, and it is discharged toward the atmosphere through the left and right exhaust opening portions 6b.

Accordingly, the ventilation resistance of the inter-cooler 4, which is arranged to cover the front surface of the lower radiator core support member 1b, can be decreased, and accordingly the cooling ability of the inter-cooler 4 can be improved.

In addition, the air in the airflow space 6 is divided to flow in the left and right directions, and it is discharged toward the atmosphere through the exhaust opening portions 6b. This can decrease the high-temperature air that has passed through the inter-cooler 4 to hit against the condenser 3 and the radiator 2 located behind the inter-cooler 4. Consequently, the cooling abilities of the condenser 3 and the radiator 2 can be also improved.

Further, the air that has flowed in the airflow space 6 is discharged toward the left and right side end portions of the lower radiator core support member 1b through the exhaust opening portions 6b. Therefore, the discharged air is not blown back toward the front surfaces of the inter-cooler 4, the condenser 3 and the radiator 2.

Next, the advantages of the radiator core support structure of the embodiment will be described.
The radiator core support structure of the embodiment includes the radiator core support 1 and the intercooler 4 so that the inter-cooler 4 is arranged to face the front surface of the lower radiator core support member 1b to cover the front surface thereof. The lower radiator core support member 1b is formed with the airflow space 6 that is formed inside of the lower radiator core support member 1b to extend in the lateral direction of the motor vehicle. The airflow space 6 is fluidically connected with the intake opening portions 6a that are formed on the front surface of the lower radiator core support member 1b at the positions where the inter-cooler 4 faces the lower radiator core support member 1b, and also with the exhaust opening portions 6b that are formed at on the both end portions of the lower radiator core support member 1b. Therefore, the ventilation resistance of the inter-cooler 4, which is arranged to cover the front surface of the lower radiator core support member 1b, can be decreased, and accordingly cooling ability of the inter-cooler 4 can be improved.

In addition, the exhaust opening portions 6b are formed on the both of the lateral-directional end portions of the lower radiator core support member 1b. Therefore, the necessary vertical directional rigidness of the lower radiator core support member 1b can be ensured, and the air discharged from the exhaust opening portions 6b can be prevented from being blown back toward a front surface of the inter-cooler 4.

As the embodiment has been described above, the present invention is not limited to the above-described embodiment, and design changes and modifications thereof are contained in the present invention as long as they do not depart from the scope of the present invention.

The types, the number, the core size, the front-and-back and arrangement in a front and back direction of heat exchangers that are mounted on a radiator core support may be set appropriately. The inter-cooler is the first heat exchanger that is arranged to cover the front surface of the lower radiator core support member in the embodiment, but the first heat exchanger is not limited to the inter-cooler, and accordingly it may be an oil cooler, a sub-radiator, and a general heat exchanger.
In addition, the configurations, the opening areas and the number of the intake opening portions 6a and the exhaust opening portions 6b may be set appropriately.

Further, the airflow space 6 may be divided at a position located between both of the intake opening portions 6a of the lower radiator core support member 1b, and one of the exhaust portions 6b thereof may be omitted.

Further, the exhaust portions 6b may be formed on a bottom surface of the lower radiator core support member 1b, although it is a little inferior because rainwater, foreign matter or the like may come in the lower radiator core support member 1b from below.

### [INDUSTRIAL APPLICABILITY]

The radiator core support structure of the present invention is not only applied to automobiles, but also applicable to vehicles.

## Claims

1. A radiator core support structure comprising:
a radiator core support (1) having a lower radiator core support member (1b);
a first heat exchanger (4) that is arranged to face a front surface of the lower radiator core support member (1b) to cover the front surface thereof; and
a second heat exchanger (2, 3) that is aligned with the first heat exchanger (4) at a rear side thereof, wherein
the lower radiator core support member (1b) is formed with an airflow space (6) that is formed inside of the lower radiator core support member (1b) to extend in a lateral direction of a vehicle, and wherein
the airflow space (6) is fluidically connected with an intake opening portion (6a) that is formed on the front surface of the lower radiator core support member (1b) at a position where the first heat exchanger (4) faces the lower radiator core support member (1b) to cover, and also with an exhaust opening portion (6b) that is formed at on a partial portion of the lower radiator core support member (1b).

2. The radiator core support structure according to claim 1, wherein
the exhaust opening portion (6b) is formed on an end portion, in the lateral direction, of the lower radiator core support member (1b).
